# EUROPEAN PATENT SPECIFICATION

(11) **EP 1 562 746 B1**
(45) Date of publication and mention of the grant of the patent: **04.06.2008**
(21) Application number: 03750706.8
(22) Date of filing: 10.10.2003
(51) Int. Cl.: B32B 27/08, B32B 27/34, B32B 27/32, B32B 27/30

(54) **HEAT SHRINKABLE BIORIENTED MULTILAYER FILM WITH GAS BARRIER PROPERTIES**
MEHRSCHICHTIGER HITZESCHRUMPFBARER BIAXIAL ORIENTIERTER FILM MIT GASBARRIEREEIGENSCHAFTEN
FILM MULTICOUCHE THERMORETRACTABLE BIAXIALEMENT ORIENTE FAISANT BARRIERE AU GAZ

(30) Priority: 11.10.2002 IT MI20022156
(43) Date of publication of application: 17.08.2005
(73) Proprietor: POLIFILMS S.r.l., 20014 Nerviano (Milano) (IT)
(72) Inventor: FLOCCO, Luigi, I-20097 San Donato (IT)
(74) Representative: Appoloni, Romano
(86) International application number: PCT/EP2003/011237
(87) International publication number: WO 2004/033200

(56) References cited:
- US-A- 4 239 826
- US-A- 5 324 572
- DATABASE WPI Section Ch, Week 198735 Derwent Publications Ltd., London, GB; Class A32, AN 1987-245808 XP002270774 & JP 62 167047 A (MITSUBISHI MONSANTO KK), 23 July 1987 (1987-07-23)

## Description

### Field Of The Invention

The present invention relates to a coextruded heat shrinkable bioriented multi-layer film with gas barrier properties.

### Prior Art

Heat shrinkable thermoplastic films with barrier characteristics towards gases, principally oxygen, carbon dioxide and water vapour, have found ever increasing application in food product packaging. Research is continuing in order to improve in particular gas barrier properties, heat shrinkage, tensile strength and tear resistance, optical properties and ease of production on packaging machines.

Heat shrinkable barrier films for the flood sector are currently manufactured using the "double bubble" or "tenter frame" processes. They are generally coextruded tubes or flat sheets which are cooled in the first extrusion phase then reheated in infrared or hot air ovens, and subsequently biorientated at below melting point. In the past, prior to biorientation, multi-layer films were also obtained by laminating and coupling of mono-layers, by "extrusion coating" or coating of already biorientated films. Biorientation at below the polymer melting point allows the final products to acquire optimum heat shrinkage characteristics and optical and mechanical properties.

Usually such films are coextruded in three, five, seven or more layers. Normally polymers with gas barrier characteristics are used therein, generally positioned in the core layer of the coextrudate, such as polyamides, polyesters, polyvinylidene chloride, ethylene vinyl alcohol, depending on the process technology and barrier function required and the type of product to be packaged. The other layers are generally composed of polymers of the polyolefin family, suitable for contact with food, able to resist water vapour and with optimal heat seal characteristics.

In this regard US Patent 3,821,182 can be cited, describing a multi-layer film with polyethylene in the outer layers and a core layer of polyvinylidene chloride bonded to the outer layers with adhesive, which are irradiated before biaxial stretching for the purpose of improving its mechanical characteristics. US Patent 4,741,253 describes a multi-layer film obtained by lamination, by coupling a layer of cross-linked ethylene-vinyl acetate (EVA) with a layer of vinylidene chloride, whose free surface is coupled to another layer of cross-linked ethylene vinyl acetate.

U.S. Patent 4,064,296 describes a heat shrinkable barrier product obtained with ethylene vinyl acetate and ethylene vinyl alcohol polymers, coextruded with the following structure (EVA/EVOH/EVA), which are cross-linked by irradiating the tube prior to stretching.

U.S. 4,347,332 describes a multi-layer coextruded barrier film using a blend of ethylene vinyl alcohol (EVOH) and polyamide Nylon 6 and 66 for the barrier layer. The coextrudate was obtained by a flat head, cooled on the chill roll then reheated' using hot steel rollers and stretched in both directions.

U.S. 4,724,185 describes a heat shrinkable barrier film obtained by coextruding a blend of polyamide and ethylene vinyl alcohol in the core layer, two adhesive layers and two external outer layers of a blend of two types of polyethylene.

U.S. 4,640,856 describes a multi-layer gas barrier film obtained by a coating procedure wherein the core barrier layer, formed of polyvinylidene chloride or ethylene vinyl alcohol, is faced by two outer layers of very low density polyethylene copolymers (VLDPE) coupled together by coating. In this case too the polyethylene layers are cross-linked by irradiation before being coupled and biorientated.

European Patent 0561428 A1 and European Patent 0545312 A1 describe heat shrinkable multi-layer coextrudates which use in the barrier core layer mixtures of polymers such as ethylene vinyl alcohol (EVOH) and copolyamides. In the first patent the primary tube is irradiated with beta electron beams and therefore a cross-linked finished product is obtained. In the external layers, polyethylene copolymers mixed with vinyl acetate copolymers are used, both layers being made to adhere to the core layer by copolymers functionalized with maleic anhydride or acrylates acting as binders.

In the second patent the film is not cross-linked but an asymmetrical film is produced, i.e. having a food-contacting sealing inner layer of polyethylene or blends of polymers of the polyolefin family, with the pack external layer of polyester (PET).

US-A-5324572 discloses thermoplastic multilayer films comprising a barrier film based on polyvinyl alcohol with, on one side or both sides, covering films of plastic.

### Summary

The object of the present invention is to improve the characteristics of said multi-layer films of the known art, in particular by changing the mechanical and gas barrier properties of the individual components so that, by varying the percentages of the polymers in the core layer, the gas and humidity barrier characteristics of the film can be changed in a targeted way so that the finished product can be used for packaging food either in a modified atmosphere or under vacuum.

### Brief description of the drawings

Fig 1 shows the variation of viscosity (Pas) as a function of the shear gradient (X axis-sec⁻¹) for a polyvinylalcohol (PVA) compound suitable to be used in core layer A.
Fig 2 shows the variation of viscosity as a function of the shear gradient (X axis-sec⁻¹) for a copolyamide suitable to be used in core layer A.
Fig 3 shows the variation of viscosity as a function of the shear gradient (X axis-sec⁻¹) for a ethylene vinyl alcohol copolymer (EVOH) suitable to be used in core layer A.

### Detailed Description of the Invention

To achieve this aim, the invention proposes a coextruded heat shrinkable multi-layer film with gas barrier properties, with at least one core layer and two external layers, characterised in that it comprises a polyvinyl alcohol (PVA) based core layer which also comprises a polyamide or copolyamide, and an ethylene vinyl alcohol copolymer (EVOH).

Its multi-layer structure is preferably of five or more layers, represented by the following schemes: five layers (C/B/A/B/C) or (C/B/A/B/D); seven layers (D/C/B/A/B/C/D) or (D/C/B/A/B/C/E). In all said schemes, A represents the polyvinyl alcohol (PVA) based core barrier layer.

A film of the present invention generally has a thickness between 0.005 and 0.1 mm, preferably between 0.015 and 0.075 mm and even more preferably between 0.20 and 0.40 mm.

It undergoes asymmetrical heat shrinkage which can reach from 20% to 80% of its initial surface, preferably from 30% to 70% and even more preferably from 40% to 60%, with a shrink tension of 0.5 to 5 N/mm², preferably from 1 to 4 N/mm² and even more preferably 1.5 to 3.5 N/mm².

Preferably, the final film is obtained by simultaneously coextruding the various polymer components in a multi-layer structure by the double bubble system, consisting of extruding a primary tube of thickness from 200 to 800 micron, more preferably from 300 to 600 micron and even more preferably from 400 to 500 micron: cooling with water to a temperature of 15-20°C; reheating the tube with an infrared source to a temperature within the range between the softening point (vicat) and the melting point of the coextrudate, determined by a differential scanning calorimeter (DSC). The term softening point (vicat) means the temperature at which the material begins to soften if immersed in a bath containing a thermal liquid whose temperature increases slowly: the value used is the temperature at which a 1 mm² steel point placed with a 1 kg weight on the sample of the product penetrates by one millimetre, the test being effected according to ASTM specification D 1525. Said range is between 65°C and 125°C, preferably between 80°C and 115°C, and even more preferably between 90°C and 110°C. The film is subsequently stretched in both the extrusion and transverse directions, an operation which takes place simultaneously by blowing air under pressure into the primary tube which rapidly expands, swelling with a symmetrical racking ratio of about 1:3, preferably 1:3.5 and even more preferably 1:4.5 to 1:5.5.

The core layer A of the coextrudate, which can represent about 20% of the total final film, is the layer that functions as gas barrier.

According to the present invention, it is based on polyvinyl alcohol (PVA).

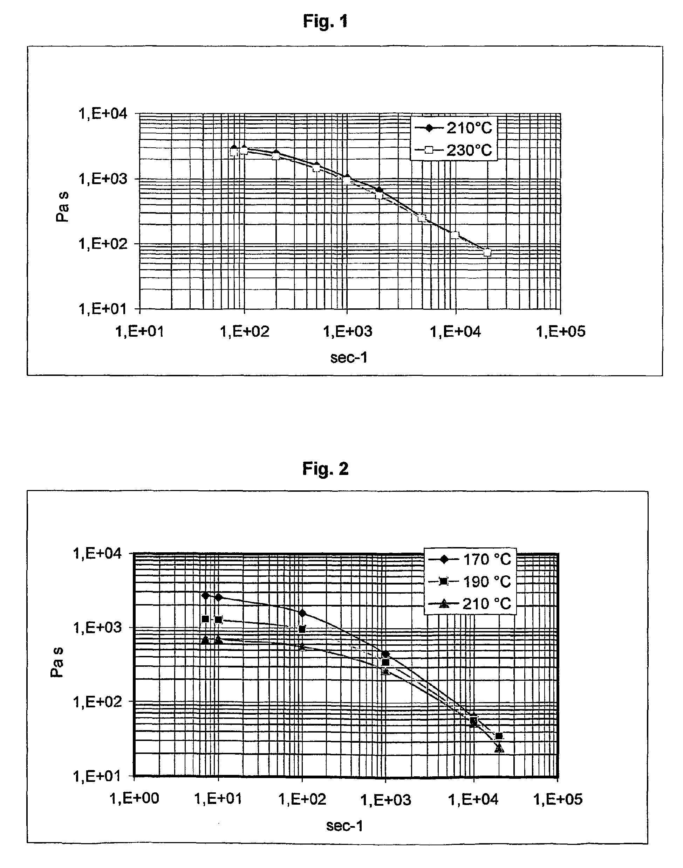

According to a preferred embodiment of the present invention, it comprises a polyvinyl alcohol based compound whose principle characteristics are: degree of hydrolysis from 90 to 100 mol %, preferably from 95 to 100 mol % and even more preferably from 98 to 100 mol %; fluidity index (MFI) (conducted at 190°C with a 2.160 Kg weight) from 0.5 to 15 g/10min, preferably from 2 to 10 g/10min, and even more preferably from 3 to 7 g/10min. As a non limiting example, we report below in TABLE 1, and in the graph of Fig 1 of the attached drawings, the basic characteristics of a polyvinyl alcohol compound used in the invention.

These drawings show, in Figs 1, 2 and 3, three graphs reporting the variation of viscosity (Pas) as a function of the shear gradient (x-axis, sec⁻¹) for the compounds described.

**TABLE 1**

| DSC Calorimetric analyses | | | | |
|---|---|---|---|---|
| Test conditions | 1^{st} heating 10°C/min | Cooling 10°C/min | 2^{nd} heating 10°C/min | Notes |
| Tg (°C) | 44 | - | 50 | Glass transition temperature |
| Tf (°C) | 203 | - | 213 | Melting point |
| Δ Hf (J/g) | 83 | - | 77 | |
| Tc (°C) | - | 171 | - | Crystallisation temperature |
| Δ Hc (J/g) | - | 81 | - | - |

| Polymer Characteristics | | | | |
|---|---|---|---|---|
| Analyses | Unit of measurement | ASTM Specification | Measured value | Granule condition |
| Density | g/cc | D 1505 | 1.21 | |
| MFI at 210°C | gr/10min | D 1238 | 2.9/ 2.6 | not dried/dried |
| MFI at 230°C | gr/10min | D 1238 | 4.9/ 4.6 | not dried/dried |

The calorimetric tests reported in Table 1 determine the thermal characteristics of the material and its crystallisability under non-isothermal conditions. With this objective, a granule of PVA was subjected to a thermal cycle consisting of an initial heating at 10°C/min, a 2 minute isotherm to cancel the thermal history of the granule, cooling at -10°C/min and a second heating at 10°C/min. The quantities reported are: Tg = glass transition temperature, Tf = melting point, Tc = crystallisation temperature, with the relative fusion and crystallisation enthalpies (Δ Hf and Δ Hc) required to reach said values, expressed in J/g.

The core layer A also comprises a polyamide or copolyamide.

Preferably the copolyamide is of low melting point and with the characteristics reported below in TABLE 2 and in the graph, Fig.2, of the attached drawings.

**TABLE 2**

| Characteristics | ASTM Specifications | Unit of measurement | Value |
|---|---|---|---|
| Nylon 6/12 | - | Mol % | 60/40 |
| Melting point | (10°C/min) | °C | 130 |
| Softening point (vicat) | (50°C/h 50N) | °C | 55 |
| MFR at 275°C, 5Kg | D 1938 | cc/10min | 200 |
| Density | D 1505 | g/cc | 1.12 |

The core layer A also comprises an ethylene vinyl alcohol copolymer (EVOH).

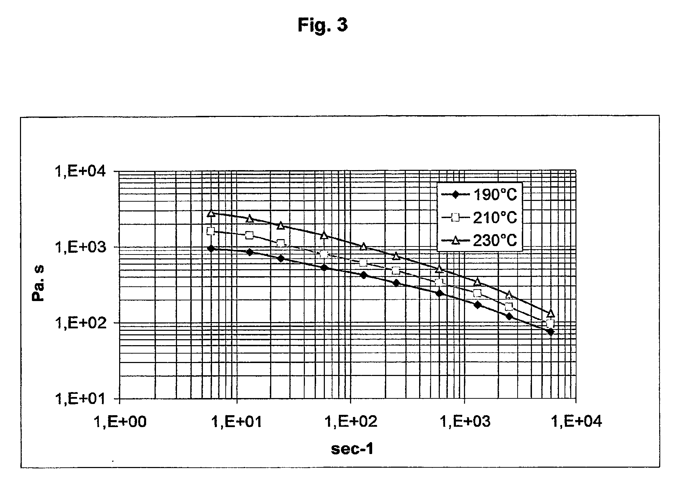

Preferably, this is an ethylene vinyl alcohol copolymer with an ethylene percentage between 27% and 38%, more preferably between 44% and 47%, whose characteristics are reported in the following TABLE 3 and in the graph, Fig. 3 of the attached drawings.

**TABLE 3**

| Characteristics | ASTM Specifications | Unit of measurement | Value |
|---|---|---|---|
| Ethylene content | GTP-002 | Mol% | 47 |
| Melting point | DSC | °C | 160 |
| Softening point (VICAT) | D1525 | °C | 150 |
| Fluidity index (MFR) | D1938 | g/10min | 6.4 |
| Density | D1505 | g/cc | 1.12 |
| Glass transition temperature (Tg) | DSC | °C | 50 |

Said three components of the core layer A can be blended in different proportions so as to obtain film for packaging products with differential oxygen barrier characteristics, possibly between 0.4 and 100 cc/m²/24h.

In the case of a five layered film, the intermediate or adhesive layers, previously indicated as B, which can represent about 24% of the final film, are preferably copolymers or terpolymers of ethylene or propylene or ethylene vinylacetate, functionalized with comonomers of maleic anhydride or acrylic or methacrylic acid. Their function is to hold the external layers bound to the core layer A, normally not compatible with said external layers.

Preferably, said component polymers of said intermediate layers have the characteristics indicated in TABLE 4 as follows.

**TABLE 4**

| Characteristics | ASTM Specifications | Unit of measurement | Value |
|---|---|---|---|
| MFR | D 1938 | g/10min | 2.5 |
| Density | D 1505 | g/cm | 0.9 |
| Melting point | DSC | °C | 95 |
| Softening point (vicat) | D 1525 | °C | 74 |

In the case of a five layered film, the external layers, previously indicated as C, of which one will be on the inside of the pack as a sealing and non-toxic layer as it is in contact with food, and the other will be on the outside of the pack as a display and stiffening layer, can represent about 56% of the final film. These are composed of polymers and copolymers of polyolefins, such as radical-type low density polyethylene (LDPE), copolymers of linear polyethylene with a density between 0.880 g/cc and 0.945 g/cc (ultra low density polyethylene - ULDPE), with a density between 0.880 g/cc and 0.912 g/cc (very low density polyethylene - VLDPE), with a density between 0.912 g/cc and 0.916 g/cc (linear low density polyethylene - LLDPE), with a density between 0.916 g/cc and 0.930 g/cc (linear medium density polyethylene - LMDPE) and with a density between 0.930 g/cc and 0.945 g/cc.

Polymers with metallocenic catalysis and copolymers such as ethylene vinyl acetate (EVA), ethylene butyl acrylate (EBA), ethylene methyl acrylate (EMA), polypropylene copolymer (PPC) and terpolymer (PPT) are also proposed, used as such or blended.

Said external layers confer barrier properties against water vapour to the film, of up to 10 g/m²/24h, and sealing resistance, and must be suitable for use in contact with food. The following TABLE 5 shows some chemical and physical characteristics of the component polymers of said external layers of a film according to the invention.

**TABLE 5**

| Characteristics | ASTM Specifications | Unit of measurement | Value |
|---|---|---|---|
| MFR | D 1938 | g/10min | 1.0 |
| Density | D 1505 | g/cm | 0.925 |
| Melting point | DSC | °C | 125 |
| Softening point (vicat) | D1525 | °C | 107 |

The present invention is now described in greater detail in the following examples which in no way limit the scope of the invention. Examples 1-3 do not fall under the scope of the claims.

### Example 1

A 25 micron thick film coextruded using the double bubble technique was produced with the following five layer structure: (C/B/A/B/C). The proportions of the layers are C28%, B12%, A20%, B12%, C28%; the thickness of the primary tube is 484 micron, heated by infrared to a temperature between 108°C and 115°C, stretched with a racking ratio of 1:4.3 in both machine and transverse directions. At the exit of the extruder the primary tube is cooled to a temperature of 30°C, and then collected on a winder at a speed of 15 m/min.
The resins used in said layers are the following:
A - 100% of a polyvinyl alcohol based compound whose characteristics are reported in the aforesaid Table 1.
B - 24% of a maleic anhydride functionalized graft copolymer on a polypropylene base, whose characteristics are reported in aforesaid Table 4.
C - 56% of an octene linear copolymer whose characteristics are reported in aforesaid Table 5.

Indicative examples of commercially available products used for layers A, B and C respectively are:
A: A10 COEX TEST 14 (SORI)
B: ADMER AT 1657E (Mitsui Chemicals)
C: Clearflex FL 368 (Polmeri Europa)

### Example 2

A five layered coextruded film (C/B/A/B/C) of 27µ thickness was produced with the same technology used in example 1 and with the same polymers, with the difference that 10% of an EVA copolymer (commercially known as EVATANE 1010 VN3), having a vinyl acetate content of 9%, a melt fluidity index, at 190°C and with a 2.160 Kg weight, of 1.5 g/10min and a density at 23°C of 0.929 g/cc, is added to each of the external layers C.

### Example 3

A 24 µ thick five layered coextruded film was produced with the following structure : (C/B/A/B/D), with layer ratios as in example 1. The resins used in the various layers are : A - 85% of the compound known commercially as "A10 coex TEST 14" plus 15% of EMS Grilon CF 6 S copolyamide.
B - as in example 1
C - 80% of polypropylene terpolymer (PPT) available from BASEL as ADSYL 5 C 37 F, characterised by a melting point of 133°C and a melt fluidity index of 5.5 g/10min tested at 230°C with a 2.160 Kg weight, plus 20% of polypropylene copolymer (PPC) available from BASF as ELTEX KL 467, characterised by a melting point of 143°C as determined by DSC and a melt fluidity index of 1.8 g/10min tested at a temperature of 230°C with a 2.160 Kg weight, according to the standard ISO 1133.
D - core sealing layer, formed as said layer C in example 2

### Example 4

A 25 µ thick five-layered coextruded film was obtained with a structure as in example 1 but with the core layer A having the following composition: 40% of said compound A10 COEX TEST 14; 30% of said Grilon CF 6 S copolyamide; 30% ethylene vinyl alcohol available from Kuraray as EVAL G 156 B. The intermediate layers B and the external layers C are as in example 2.

### Example 5

A 25 µ thick five-layered coextruded film was obtained with a structure as in example 1 but with the core layer A having the following composition: 10% of said compound A10 COEX TEST 14; 40% of said Grilon CF 6 S copolyamide (see example 3); 50% ethylene vinyl alcohol available from Kuraray as EVAL G 156 B (see example 4).

The intermediate layers B and the external layers C are as in example 1.

### Example 6

A 25 µ thick five-layered coextruded film was obtained with a structure as in example 5, but with the compositions of the external layers C being a blend of 50% polypropylene terpolymer available from BASEL as ADSYL 5 C 37 F (see characteristics in example 3) plus 50% linear copolymer, supplied by Polimeri Europa as Clearflex FL 368 (see characteristics in Table 5). The intermediate layers B and the central core A are as in example 5.

The characteristics of the films having the composition described in the examples, are reported in TABLES 6 and 7.

**TABLE 6**

| FINAL FILM CHARACTERISTICS | Unit of measurement | Example 1 | Example 2 | Example 3 | ASTM Specification |
|---|---|---|---|---|---|
| Film thickness | micron | 25 | 27 | 21 | internal |

| OPTICAL CHARACTERISTICS | | | | | |
|---|---|---|---|---|---|
| Surface specularity (Gloss 60°) | % | 90 | 95 | 98 | D 2457 |
| Haze | % | 4 | 3.8 | 3.4 | D 1003 |

| MECHANICAL CHARACTERISTICS | | | | | |
|---|---|---|---|---|---|
| Tensile strength MD/TD | Mpa | 70/90 | 63/82 | 80/95 | D 882 |
| Elongation at break MD/TD | % | 105/130 | 112/138 | 62/64 | " |
| Secant modulus 1% MD/TD | Mpa | 640/750 | 610/720 | 810/900 | " |
| Elemendorf tear resistance MD/TD | Mpa | 10.2/9.8 | 13/11 | 7.5/6.5 | D 1922 |

| THERMAL CHARACTERISTICS | | | | | |
|---|---|---|---|---|---|
| Heat shrinkage at 120°C MD/TD | % | 51/50 | 56/54 | 48/48 | D 1204 |
| Shrink force MD/TD | Mpa | 2.2/2.7 | 1.9/2.4 | 3/3.3 | D 2838 |
| Heat seal resistance | N/15 mm | 15.23 | 14.8 | 16.5 | internal |

| TRANSMISSION CHARACTERISTICS | | | | | |
|---|---|---|---|---|---|
| O₂ transmission 0% RH | Cc/m²/24h | 0.4 | 0.42 | 24.8 | D 3985 |
| O₂ transmission 85% RH | Cc/m²/24h | 15.23 | 14.8 | 17.3 | " |
| Water vapour transmission 100% RH | G/m²/24h | 10.4 | 12 | 15.3 | E9E |

| TRIBOLOGICAL CHARACTERISTICS | | | | | |
|---|---|---|---|---|---|
| Coefficient of friction | - | 0.23 | 0.31 | 0.27 | D 1894 |

**TABLE 7**

| FINAL FILM CHARACTERISTICS | Unit of measurement | Example 4 | Example 5 | Example 6 | ASTM Specification |
|---|---|---|---|---|---|
| Film thickness | micron | 25 | 25 | 25 | internal |

| OPTICAL CHARACTERISTICS | | | | | |
|---|---|---|---|---|---|
| Surface specularity (Gloss 60°) | % | 97 | 95 98 | | D 2457 |
| Haze | % | 3.6 | 4.2 3.7 | | D 1003 |

| MECHANICAL CHARACTERISTICS | | | | | |
|---|---|---|---|---|---|
| Tensile strength MD/TD | Mpa | 74/92 | 65/87 | 88/98 | D 882 |
| Elongation at break MD/TD | % | 115/132 | 122/133 | 72/84 | " |
| Secant modulus 1% MD/TD | Mpa | 660/740 | 710/740 | 820/930 | " |
| Elemendorf tear resistance MD/TD | Mpa | 11.3/10. 8 | 15/13 | 17.5/18. 4 | D 1922 |

| THERMAL CHARACTERISTICS | | | | | |
|---|---|---|---|---|---|
| Heat shrinkage at 120°C MD/TD | % | 55/60 | 53/58 | 50/48 | D 1204 |
| Shrink force MD/TD | Mpa | 2.6/2.9 | 2.9/3.4 | 3.3/3.5 | D 2838 |
| Heat seal resistance | N/15 mm | 17.4 | 15.8 | 14.3 | internal |

| TRANSMISSION CHARACTERISTICS | | | | | |
|---|---|---|---|---|---|
| O₂ transmission 0% RH | Cc/m²/24h | 22 | 32 | 26 | D 3985 |
| O₂ transmission 85% RH | Cc/m²/24h | 16.7 | 18.5 | 18.4 | " |
| Water vapour transmission 100% RH | G/m²/24h | 11.6 | 16 | 14.3 | E9E |

| TRIBOLOGICAL CHARACTERISTICS | | | | | |
|---|---|---|---|---|---|
| Coefficient of friction | - | 0.26 | 0.27 | 0.30 | D 1894 |

According to the invention, a heat shrinkable bioriented multi-layer gas barrier film suitable for improving the "shelf-life" of food products is obtained, with excellent oxygen, carbon dioxide, nitrogen and humidity barrier properties, and with heat shrinkage such as to permit complete adherence to the surfaces of products to be packaged, excellent optical and mechanical characteristics, wide temperature range of processability on packaging machines, and a wide sealability temperature range.

The principle characteristic of such film is that it mediates the mechanical and gas barrier characteristics of the individual components, so that by varying the percentages of polymers in the core layer the gas and moisture barrier characteristics of the film can be modulated as required, with the result that the final product can be used for packaging food either in a modified atmosphere or under vacuum.

In general, the double bubble processing technique is found to also contribute to achieving a final film characterised by excellent optical and mechanical properties and a substantial heat shrinkage which can achieve symmetrical shrinkage levels of 70% of the initial area.

In producing a film according to the invention, after stretching, the polymer mass can also be cross-linked by beta ionising rays, allowing both the packaging machine processability and thermal and mechanical characteristics to be improved, i.e. an increase in the range of working temperatures both in the packaging ovens and in sealing, and a greater tear resistance.

## Claims

1. A coextruded heat shrinkable bioriented multi-layer film consisting of at least one core layer and two external layers, with gas and water vapour barrier properties **characterised in that** it comprises a polyvinyl alcohol (PVA) based core layer which also comprises a polyamide or copolyamide, and an ethylene vinyl alcohol copolymer (EVOH).

2. Film as claimed in claim 1, **characterised in that** said polyamide is a copolyamide of nylon 6,12.

3. Film as claimed in claim 1, **characterised in that** said external layers are based on polymers and copolymers of polyolefins, such as the low density linear polyethylene LDPE, ULDPE, VLDPE, LLDPE, LMDPE, polymers with metallocenic catalysis and copolymers such as ethylene vinyl acetate (EVA), ethylene butyl acrylate (EBA), ethylene methyl acrylate (EMA), polypropylene copolymer (PPC) and terpolymer (PPT), as such or blended.

4. Film as claimed in any one of the preceding claims **characterised in that** said two external layers have the same composition.

5. Film as claimed in any one of the preceding claims **characterised in that** said two external layers have different compositions.

6. Film as claimed in claim 1, **characterised in that** it comprises at least one intermediate layer between said core layer and said external layer.

7. Film as claimed in claim 6, **characterised in that** said intermediate layer is based on copolymers or terpolymers of ethylene or propylene or ethylene vinylacetate, functionalized with comonomers of maleic anhydride or of acrylic or methacrylic acid.

8. Film as claimed in claim 1, **characterised in that** said core layer comprises a PVA based compound with a degree of hydrolysis of between 90 and 100 mol %.

9. Film as claimed in claim 1, **characterised in that** said PVA compound has a MFI fluidity index of between 0.5 and 15 g/10 min.

10. Film as claimed in claim 1, **characterised in that** it has the characteristics given in said table 7 of the description.

## Patentansprüche

1. Coextrudierte warmschrumpfbare biorientierte Mehrschichtfolie bestehend aus wenigstens einer Kernschicht und zwei äußeren Schichten mit Gas- und Wasserdampfsperreigenschaften, **dadurch gekennzeichnet, daß** sie eine Kernschicht auf Basis von Polyvinylalkohol (PVA), die ebenfalls ein Polyamid oder Copolyamid umfaßt, und ein Ethylenvinylalkohol-Copolymer (EVOH) umfaßt.

2. Folie gemäß Anspruch 1, **dadurch gekennzeichnet, daß** das Polyamid ein Copolyamid von Nylon-6,12 ist.

3. Folie gemäß Anspruch 1, **dadurch gekennzeichnet, daß** die äußeren Schichten auf Polymere und Copolymere von Polyolefinen, wie etwa das lineare Polyethylen niederer Dichte LDPE, ULDPE, VLDPE, LLDPE, LMDPE, Polymere mit Metallocen-Katalyse und Copolymere wie etwa Ethylenvinylacetat (EVA), Ethylenbutylacrylat (EBA), Ethylenmethylacrylat (EMA), Polypropylen-Copolymer (PPC) und -Terpolymer (PPT) als solchen oder als Blend basieren.

4. Folie gemäß einem der vorstehenden Ansprüche, **dadurch gekennzeichnet, daß** die zwei äußeren Schichten die gleiche Zusammensetzung aufweisen.

5. Folie gemäß einem der vorstehenden Ansprüche, **dadurch gekennzeichnet, daß** die zwei äußeren Schichten eine unterschiedliche Zusammensetzung aufweisen.

6. Folie gemäß Anspruch 1, **dadurch gekennzeichnet, daß** sie wenigstens eine Zwischenschicht zwischen der Kernschicht und den äußeren Schichten umfaßt.

7. Folie gemäß Anspruch 6, **dadurch gekennzeichnet, daß** die Zwischenschicht auf Copolymere oder Terpolymere von Ethylen oder Propylen oder Ethylenvinylacetat, das mit Comonomeren aus Maleinsäureanhydrid oder aus Acrylsäure oder Methacrylsäure funktionalisiert ist, basiert.

8. Folie gemäß Anspruch 1, **dadurch gekennzeichnet, daß** die Kernschicht eine Komponente auf PVA-Basis mit einem Hydrolysegrad von zwischen 90 und 100 mol% umfaßt.

9. Folie gemäß Anspruch 1, **dadurch gekennzeichnet, daß** die PVA-Verbindung einen Schmelzflußindex von zwischen 0,5 und 15 g/10 min aufweist.

10. Folie gemäß Anspruch 1, **dadurch gekennzeichnet, daß** sie die in Tabelle 7 der Beschreibung dargestellten Eigenschaften aufweist.

## Revendications

1. Film multicouche biorienté thermorétractable coextrudé composé d'au moins une couche centrale et de deux couches externes, avec des propriétés de barrière contre les gaz et la vapeur d'eau, **caractérisé en ce qu'**il comprend une couche centrale à base de poly(alcool vinylique) (PVA) qui comprend également un polyamide ou un copolyamide, et un copolymère d'éthylène et d'alcool vinylique (EVOH).

2. Film selon la revendication 1, **caractérisé en ce que** ledit polyamide est un copolyamide de nylon 6,12.

3. Film selon la revendication 1, **caractérisé en ce que** lesdites couches externes sont à base de polymères et de copolymères de polyoléfines, tels que le polyéthylène linéaire basse densité LDPE, l'ULDPE, le VLDPE, le LLDPE, le LMDPE, de polymères avec catalyse métallocénique et de copolymères tels que l'éthylène-acétate de vinyle (EVA), l'éthylène-acrylate de butyle (EBA), l'éthylène-acrylate de méthyle (EMA), un copolymère de polypropylène (PPC) et un terpolymère de polypropylène (PPT), tels quels ou en mélange.

4. Film selon l'une quelconque des revendications précédentes, **caractérisé en ce que** lesdites deux couches externes ont la même composition.

5. Film selon l'une quelconque des revendications précédentes, **caractérisé en ce que** lesdites deux couches externes ont des compositions différentes.

6. Film selon la revendication 1, **caractérisé en ce qu'**il comprend au moins une couche intermédiaire entre ladite couche centrale et lesdites couches externes.

7. Film selon la revendication 6, **caractérisé en ce que** ladite couche intermédiaire est à base de copolymères ou de terpolymères d'éthylène ou de propylène ou d'éthylène-acétate de vinyle, fonctionnalisés avec des comonomères d'anhydride maléique ou d'acide acrylique ou méthacrylique.

8. Film selon la revendication 1, **caractérisé en ce que** ladite couche centrale comprend un composé à base de PVA avec un degré d'hydrolyse compris entre 90 et 100 % en mole.

9. Film selon la revendication 1, **caractérisé en ce que** ledit composé de PVA possède un indice de fluidité MFI compris entre 0,5 et 15 g/10 minutes.

10. Film selon la revendication 1, **caractérisé en ce qu'**il présente les caractéristiques données dans le tableau 7 de la description.
